(19) Europäisches Patentamt
European Patent Office
Office européen des brevets

(11) EP 2 578 606 B2

(12) NEW EUROPEAN PATENT SPECIFICATION
After opposition procedure

(45) Date of publication and mention of the opposition decision:
**28.08.2019 Bulletin 2019/35**

(45) Mention of the grant of the patent:
**17.02.2016 Bulletin 2016/07**

(21) Application number: **11008015.7**

(22) Date of filing: **04.10.2011**

(51) Int Cl.:
***C08F 6/00*** *(2006.01)* ***C08F 10/00*** *(2006.01)*
***C08F 297/08*** *(2006.01)* ***C08J 3/22*** *(2006.01)*
***C08F 6/02*** *(2006.01)* ***C08K 3/00*** *(2018.01)*

# (54) Process for the production of polyolefins wherein an antioxidant is fed to the reaction mixture during the process

Verfahren zur Herstellung von Polyolefinen, wobei ein Antioxidationsmittel während des Verfahrens dem Reaktionsgemisch zugeführt wird

Procédé de production de polyoléfines dans lesquels un antioxydant est alimenté en mélange à réaction durant le procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2013 Bulletin 2013/15**

(73) Proprietor: **Borealis AG**
**1220 Vienna (AT)**

(72) Inventors:
- **Bergstra, Michiel**
  **2600 Berchem (BE)**
- **Eriksson, Erik**
  **444 54 Stenungsund (SE)**
- **Hagstrand, Per-Ola**
  **44446 Stenungsund (SE)**
- **Anker, Martin**
  **42543 Hisings Kärra (SE)**
- **Vahteri, Markku**
  **06100 Porvoo (FI)**
- **Fosse, Knut**
  **3711 Skien (NO)**

(74) Representative: **Kador & Partner PartG mbB**
**Corneliusstraße 15**
**80469 München (DE)**

(56) References cited:

| | |
|---|---|
| **EP-A1- 0 139 930** | **EP-A1- 0 261 727** |
| **EP-A1- 0 351 360** | **EP-A1- 1 849 819** |
| **EP-A1- 2 072 203** | **EP-A1- 2 281 825** |
| **EP-A1- 2 348 058** | **EP-A1- 2 615 118** |
| **EP-A1- 2 682 410** | **EP-A2- 0 198 644** |
| **EP-A2- 0 254 348** | **EP-A2- 0 710 677** |
| **WO-A1-2011/027793** | **WO-A1-2011/057927** |

- **N. KAWAMOTO: "Novel stabilization system for polypropylene via the Ziegler-Natta catalysed polymerisation in the presence of aluminium aryloxide", J. APPL. POLYMER SCI., vol. 99, 2006, pages 1350-1358, XP008144018,**
- **DANIEL MÜLLER, ET AL: "Vitamin E - A New Choice for Polyolefin Stabilization", 1ST INTERNATIONAL CONFERENCE ON MODIFICATION, STABILIZATION AND DEGRADATION OF POLYMERS, 3 September 2000 (2000-09-03), - 7 September 2000 (2000-09-07), XP001117102,**
- **LILLI MANOLIS SHERMAN: "News Update: Antioxidants", PLASTICS TECHNOLOGY, 1 December 1993 (1993-12-01), pages 27-31, XP055324260,**
- **MÜLLER ET AL: Macromol. Symp., vol. 176, 2001, pages 17-29,**

EP 2 578 606 B2

## Description

The present invention relates to a process for the production of a stabilized polyolefin in one or more reactors wherein an antioxidant is fed to the reaction mixture during the process prior to a post-production step while polymer and/or unreacted monomers is/are present.

Antioxidants are usually used in polyolefins to improve their longevity and their resistance to ageing. Several classes of antioxidants e.g. phenolic antioxidants, phosphor containing antioxidants, sulphur containing antioxidants, aromatic amines and hindered amine stabilizers are known.

Taste and/or odour development in plastic materials is known to be due to taste and/or odour developing substances, which, in turn, are produced by chemical degradation or transformation in connection e.g. with the compounding of the plastic materials. Unwanted taste and/or odour may also arise from additives such as antioxidants which are emitted into the surrounding atmosphere e.g. food packaging, or extracted from the plastic material by an extraction medium, e.g. drinking water in pipes.

Even comparatively low concentrations of such taste- and/or odour- producing substances constitute a disadvantage in plastic materials as the human being is highly susceptible to tastes and odours in general. Concentrations as low as one or a few ppb (parts per billion) are sufficient to make a taste and/or odour evident.

In the J. Appl. Polymer Sci., Vol. 99, 2006, p. 1350-1358, "Novel stabilization system for polypropylene via the Ziegler-Natta catalysed polymerisation in the presence of aluminium aryloxide.", N. Kawamoto *et al.* describe the addition of phenolic antioxidants and their reaction products with triethyl-aluminium (aluminium aryloxide derivates) together with the polymerisation catalyst to the reactor before the polymerisation reaction is carried out. It is described that the free phenolic antioxidant deactivates the catalyst. Taste and/or odour properties are not an issue.

EP 2 072 203 discloses a process for treatment of plastic material, in particular a simplified and effective removal of volatile components with low energy consumption. This is achieved by contacting the plastic material with a solvent in liquid form.

WO2011057927 discloses a crosslinkable polymer composition comprising a polyolefin with advantageous properties for use in a cable layer. The polyolefin of the composition is produced using a high pressure process using a radical initiator.

EP 0 198 644 discloses a polymerization process, especially a solution polymerization process, for the preparation of high molecular weight polymers of alpha-olefins less susceptible to yellowness.

A heterophasic polypropylene resin having high E-modulus is disclosed in EP 2 348 058. The resin is produced by polymerization of propylene in the presence of hydrogen, wherein the concentration of hydrogen is periodically varied, followed by a degassing step of the intermediate product.

EP 1 849 819 discloses a polypropylene film and a laminated material thereof. The film is good in transparency and see-through property and is free from the problem of white crease by folding.

It is thus the object underlying the present invention to provide a process for the production of a stabilized polyolefin with improved taste and odour. Another objective is that the process can be easily applied to existing plants.

The olefin homo- or copolymers therefore, produced according to the process of the present invention, provide for material which can be used for producing food packaging films or containers, for drinking water applications such as pipes for transporting potable water, for pipes in water distribution systems or networks.

Therefore, the present invention provides in a first embodiment a process for the production of a stabilized polyolefin according to claim 1.

The present invention further provides in a second embodiment a process for the production of a stabilized polyolefin

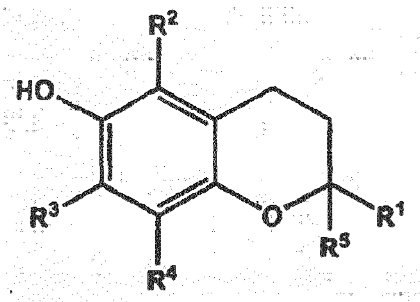

(I)

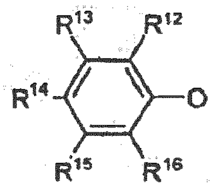

(II).

according to claim 2.

It has been surprisingly found that the addition of the antioxidant during the process to the active catalyst(s)/cocatalysts does not impair the process, e.g. does not deactivate the catalyst. Furthermore, by adding the antioxidant as in the present invention, the distribution of the antioxidant is more uniform. In addition, the antioxidant is already present in the first remelting step, e.g. for compounding with further (usually product dependent) additives or for forming an article. Thereby, decomposition caused by remelting is significantly reduced.

It has further been surprisingly found that the taste and odour of the polymers produced in the processes according to the embodiments of the invention is significantly reduced.

In all embodiments of the present invention the following definitions apply.

The term "polymer" encompasses any intermediate product generated from the used monomers present in the process according to the present invention including component (A).

Preferably, in the first embodiment the antioxidant (B) is selected from vitamin E-type stabilisers according to formula (I):

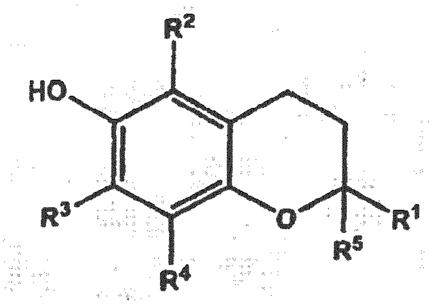

(I)

wherein $R^1$, $R^2$, $R^3$, $R^4$ and $R^5$ independently are H, or non-substituted or substituted aliphatic or aromatic hydrocarbyl radicals which may comprise heteroatoms;
or the antioxidant (B) is selected from phosphorous containing stabilizers with general formula $R^{11}$-P(OAr)$_2$, wherein OAr is according to formula (II)

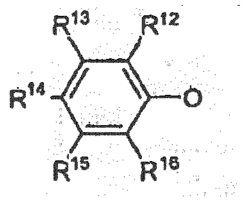

(II)

wherein

- $R^{11}$ is a non-substituted or substituted aliphatic or aromatic hydrocarbyl radical which may comprise heteroatoms,
- $R^{12}$, $R^{13}$ , $R^{14}$ , $R^{15}$ and $R^{16}$ independently are a hydrogen atom or non-substituted or substituted aliphatic or aromatic hydrocarbyl radicals which may comprise heteroatoms,

or mixtures thereof.

Unless otherwise explicitly stated to the contrary, in the following preferred features of all embodiments of the invention are described.

Component (B) may either be fed through a separate inlet or may be part of a reactant stream such as monomer fed etc.

As stated above, component (B) is fed prior to a post-production step being the catalyst deactivation step.

In case component (B) is fed to at least one reactor during the process while polymer and/or unreacted monomers is/are present in said reactor, component (B) is preferably fed to at least one reactor during the process while polymer and, optionally, unreacted monomers is/are present, more preferably component (B) is fed to at least one reactor during the process while polymer and unreacted monomers are present.

The heteroatoms which may be present in the non-substituted or substituted aliphatic or aromatic hydrocarbyl radicals $R^1$, $R^2$, $R^3$, $R^4$ and/or $R^5$ of the vitamin E-type stabiliser (B) according to formula (I) may be oxygen, sulphur, nitrogen, phosphorus or the like. It is, however, preferred that $R^1$, $R^2$, $R^3$, $R^4$ or $R^5$, more preferred $R^1$, $R^2$, $R^3$, $R^4$ and $R^5$, do not comprise heteroatoms, i.e. are non-substituted or substituted aliphatic or aromatic hydrocarbyl radicals only, or, as mentioned, H.

Furthermore, preferably $R^2$, $R^3$, $R^4$ or $R^5$, more preferably $R^2$, $R^3$, $R^4$ and $R^5$, are H, or saturated aliphatic hydrocarbyl radicals comprising from 1 to 5 carbon atoms, and still more preferably $R^2$, $R^3$, $R^4$ or $R^5$, more preferably $R^2$, $R^3$, $R^4$ and $R^5$, are H, or methyl groups.

Furthermore, preferably $R^5$ is a methyl group, regardless of the nature of the other residues $R^2$ to $R^4$

In an especially preferred embodiment, $R^4$ and $R^5$ are methyl groups, and $R^2$ and $R^3$ are H, or methyl groups.

Most preferably, $R^2$, $R^3$, $R^4$ and $R^5$ are all methyl groups.

Still further, preferably $R^1$ is a non-substituted or substituted aliphatic or aromatic hydrocarbyl radical containing from 5 to 50 carbon atoms, more preferably $R^1$ is a non-substituted or substituted aliphatic hydrocarbyl radical containing from 5 to 50, more preferably from 10 to 30, carbon atoms, and most preferably $R^1$ is a 4,8,12-trimethyl-tridecyl group.

$R^{11}$ preferably is an aliphatic or aromatic hydrocarbyl radical, wherein the heteroatoms present are selected from oxygen, nitrogen and phosphor atoms, preferably the heteroatoms present are selected from oxygen and phosphor atoms.

In case of at least one phosphor atom in $R^{11}$ it is particularly preferred that $R^1$ is directly attached to the phosphor atom of formula $R^{11}$-$P(OAr)_2$ via a carbon atom of an aromatic hydrocarbyl radical which itself is directly attached to a further phosphor atom of a further group $P(OAr)_2$ via a different carbon atom of said aromatic hydrocarbyl radical, i.e. $R^1$ is an aromatic hydrocarbyl radical bridging two $P(OAr)_2$-groups.

Preferably, the amount of carbon atoms in said bridging aromatic hydrocarbyl radical is between 6 and 25, more preferably between 6 and 20.

In an alternative particularly preferred embodiment $R^{11}$ is an aliphatic or aromatic hydrocarbyl radical wherein the only heteroatoms present are oxygen atoms, one of which connects $R^{11}$ with the phosphor atom of the $P(OAr)_2$-group and at least one other oxygen atom is present as hydroxy group. Still more preferably, said oxygen atom which connects $R^{11}$ with the phosphor atom of the $P(OAr)_2$-group and, optionally, one further oxygen being present in the form of a hydroxy group is/are the only heteroatom presents.

In the above-mentioned alternative preferred embodiment it is further preferred that $R^{11}$ comprises between 1 and 20 carbon atoms, more preferably between 2 and 16 carbon atoms.

In said alternative preferred embodiment it is further preferred that apart from said connecting oxygen atom and said optional one further oxygen being present in the form of a hydroxy group, $R^1$ does not comprise a further heteroatom and said oxygen atom connects an aromatic hydrocarbyl radical, optionally comprising said hydroxy groups with the $P(OAr)_2$-group, preferably an via an unbranched alkyl chain comprising up to 8 carbon atoms.

$R^{12}$, $R^{13}$, $R^{14}$ , $R^{15}$ and $R^{16}$ preferably comprise between one carbon atom and 20 carbon atoms each, more preferably not more than 10 carbon atoms each.

Preferably, $R^{12}$, $R^{13}$, $R^{14}$, $R^{15}$ and $R^{16}$ do not comprise any heteroatom.

Preferably, $R^{12}$, $R^{13}$, $R^{14}$, $R^{15}$ and $R^{16}$ are a hydrogen atom or aliphatic hydrocarbyl radicals, more preferably alkyl radicals. Even more preferred is that at least one of $R^{12}$ , $R^{14}$ and $R^{16}$ is an alkyl radical, more preferably with one to four carbon atoms, more preferably a methyl group or a tert-butyl group. Still more preferably, $R^{13}$ and $R^{15}$ are hydrogen atoms.

In one variant the two $R^{12}$ carbon atoms of both OAr moieties may also be connected via a hydrocarbylene bridge having 0 to 3 carbon atoms, whereby "0" denotes that there is a direct bond between both $R^{12}$ atoms.

Preferably, at least two of $R^{12}$, $R^{14}$ and $R^{16}$ are tert-butyl groups, more preferably at least $R^{14}$ and $R^{16}$ are tert-butyl groups.

It is further preferred that $R^{12}$, $R^{13}$, $R^{14}$, $R^{15}$ and $R^{16}$ is the same in the $P(OAr)_2$-group.

Particular preferred antioxidants of formula (II) are Bis(2-methyl-4,6-bis(1,1-dimethylethyl) phenyl) phosphorous acid ethylester (Irgafos 38), 6- 3- (3-tert-Butyl-4-hydroxy-5-methylphenyl) propoxy)-2,4,8,10-tetra-tert.-butyldibenz-(d,t)(1.3.2) dioxaphosphepin (Sumilizer GP) and Tetrakis(2,4-di-tert-butylphenyl)[1,1-biphenyl]-4,4'diylbisphosphonite (Irgafos P-EPQ).

More preferably, component (B) is selected from vitamin E-type stabilisers according to formula (I).

Preferably, component (B) does not comprise a metal atom.

Preferably component (B) is used in an amount of not more than 0.150 parts per weight (ppw), more preferably

not more than 0.100 parts per weight, even more preferably not more than 0.075 parts per weight and most preferably not more than 0.050 parts per weight based on 100 parts per weight of (A) + (B). Usually at least 0.005 parts per weight of (B) based on 100 parts per weight of (A) + (B) are used.

Preferably, the total amount of components (A) and (B) in the stabilized polyolefin is at least 99.0 wt.%, more preferably is at least 99.5 wt.% and most preferably, the stabilized polyolefin consists of components (A) and (B).

For the purpose of the present invention the term "the at least one reactor" denotes the reactor or plurality of reactors the antioxidant (B) is fed to.

Preferably, the at least one reactor is operated at a temperature of at least 40 °C, more preferably of at least 50 °C, even more preferably of at least 65 °C and most preferably of at least 75 °C.

The at least one reactor is preferably operated at a temperature of 120 °C or less, more preferably of 110 °C or less and most preferably of 100 °C or less.

Further, preferably the at least one reactor is operated at a pressure of at least 10 bar, more preferably of at least 15 bar.

The at least one reactor is preferably operated at a pressure of 80 bar or less, more preferably 70 bar or less.

The at least one reactor may be a loop or a gas phase reactor.

In case the at least one reactor is a loop reactor, preferably, the loop reactor is operated at a temperature of at least 55 °C, more preferably at least 65 °C, even more preferably at least 75 °C and most preferably at least 85 °C

Preferably, in case the at least one reactor is a loop reactor, the loop reactor is operated at a temperature of not more than 125 °C, more preferably not more than 115 °C and most preferably not more than 105 C.

In case the at least one reactor is a loop reactor, preferably, the loop reactor is operated at a pressure of at least 30 bar, more preferably at least 40 bar and most preferably at least 50 bar.

Preferably, in case the at least one reactor is a loop reactor, the loop reactor is operated at a pressure of not more than 80 bar, more preferably not more than 75 bar and most preferably not more than 70 bar.

In case the at least one reactor is a gas-phase reactor (GPR), preferably, the gas-phase reactor is operated at a temperature of at least 55 °C, more preferably at least 65 °C and most preferably at least 75 °C.

Preferably, in case the at least one reactor is a gas-phase reactor, the gas-phase reactor is operated at a temperature of not more than 125 °C, more preferably not more than 115 °C and most preferably not more than 105 °C.

In case the at least one reactor is a gas-phase reactor, preferably, the gas-phase reactor is operated at a pressure of at least 5 bar, more preferably at least 10 bar and most preferably at least 15 bar.

Preferably, in case the at least one reactor is a gas-phase reactor, the gas-phase reactor is operated at a pressure of not more than 50 bar, more preferably not more than 40 bar and most preferably not more than 30 bar.

In case component (B) is fed prior to a reactor, preferably said subsequent reactor, more preferably all subsequent reactors are operated under the conditions as outlined above.

Preferably the at least one reactor is a gas phase reactor.

The process is a carried out in at least two reactors connected in series, preferably at least three reactor connected in series.

The process is a carried out in at least two reactors connected in series, one of the reactors may be a prepolymerisation reactor. Such a prepolymerisation reactor is the first reactor of a series of reactors. Although in case a prepolymerisation reactor is present the process may be carried out in two reactors, i.e. the prepolymerisation reactor and a further reactor, usually the process is carried out in at least three reactors in case a prepolymerisation reactor is present.

If present, preferably, the prepolymerisation reactor is operated at a temperature of not more than 75 °C, more preferably of not more than 65 °C.

The prepolymerisation reactor, if present, is preferably operated at a temperature of at least 15 °C, more preferably at least 20 °C, even more preferably at least 45° C and most preferably at least 55 °C.

The pressure applied in the prepolymerisation reactor, if present, is preferably not higher than 75 bar, more preferably not more than 65 bar.

Preferably the pressure applied in the prepolymerisation reactor, if present, is at least 25 bar, more preferably at least 35 bar, even more preferably at least 45 bar and most preferably at least 55 bar.

The process is carried out in more than one reactor, the process preferably comprises at least one loop reactor and at least one gas-phase reactor, more preferably the process comprises a loop reactor or a series of loop reactors upstream of the gas-phase reactor or the series of gas-phase reactors. In this variant, component (B) maybe fed as outlined above, but is preferably fed to at least one gas-phase reactor, more preferably, to the last gas phase reactor.

A still further aspect of the present invention is that the process is carried out in two or more reactors connected in series, optionally further including a prepolymerization reactor (PR) upstream of the two or more reactors, and wherein the two or more reactors are a loop and/or a loop or gas-phase reactor, such as a (PR-)loop-loop, (PR-)loop-GPR, (PR-)GPR-GPR, (PR-)loop-GPR-GPR, (PR-)loop-loop-GPR, (PR-)loop-GPR-GPR-GPR or (PR-)loop-loop-GPR-GPR. The term (PR-) in the reactor sequences denotes that the prepolymerisation reactor may optionally be present.

In this aspect, component (B) maybe fed as outlined above, but is preferably fed to the last reactor.

A particularly preferred process is carried out in a multi-step process comprising a slurry/bulk loop polymerisation step, optionally preceded by a prepolymerisation step and a subsequent gas-phase polymerisation step. In this case, component (B) maybe fed as outlined above, but is preferably fed during the gas-phase polymerisation step, more preferably, in case the gas-phase polymerisation step is carried out in more than one reactor, component (B) is preferably fed to the last gas phase reactor. A preferred loop-gas-phase reactor system usable in context of the present invention is generally known as the BORSTAR® process. Particular reference is made to EP 517 868, EP 797 599, and WO 2004/111095.

A further suitable process is disclosed in EP 2 223 943 which is hereby incorporated by reference.

For technical and economical reasons usually not more than eight reactors, preferably not more than six reactors, including the optional prepolymerisation reactor, if present, are used in the process according to the invention.

The catalyst used in the process for producing the olefin homo- or copolymer with improved taste and odour according to the present invention is selected from coordination catalysts of a transitions metal, such as Ziegler-Natta catalysts, single site catalysts including metallocene- and non-metallocene based catalysts, chromium based catalysts and further catalysts suitable for carrying out the present invention.

The catalysts include coordination catalysts of a transition metal compound of the group 4 to 10 of the Periodic Table of the Elements (IUPAC) or a compound of an Actinide or Lanthanide. The catalyst may be supported, e.g. with conventional supports such as silica, Al-containing supports and $MgCl_2$-based supports.

Preferably the catalyst is a Ziegler-Natta catalyst, more preferably the catalyst is a non-silica supported Ziegler-Natta catalyst, and most preferably a $MgCl_2$-based Ziegler-Natta catalyst. The Ziegler-Natta catalyst further preferably comprises a group 4 metal compound, preferably titanium, more preferably a chlorine-containing titanium compound, $MgCl_2$ and aluminium.

A further preferred catalyst is a conventional Ziegler-Natta catalyst or single site catalyst. The catalyst is typically used together with a conventional co-activator generally known in the art. Preferred activators are aluminium alkyl compounds, such as aluminium trialkyls, aluminium dialkyl halides, aluminium dialkyl hydrides and aluminium alkyl sesquihalides. Aluminium trialkyls are especially preferred activators. Examples of these compounds are trimethylaluminium, triethylaluminium, tripropylaluminium, tri-isobutylaluminium and trioctylaluminium. Examples of aluminium dialkyl halides are dimethylaluminium chloride and diethylaluminium chloride. An example of aluminium alkyl sesquihalides is ethylaluminium sesquichloride.

According to one embodiment a Ziegler-Natta catalyst is preferred. Typically said Ziegler-Natta catalyst may contain a magnesium compound, an aluminum compound and a group 4 metal compound such as Titanium, Zirconium or Hafnium, optionally provided on a particulate support.

The catalyst may be commercially available or be produced in accordance or analogously to the literature. For the preparation of the catalyst used in the present invention reference is made to WO 2004/055068, WO 2004/055069, WO 2003/106510, EP 1 655 335 and EP-A-0 810 235, whose content is herein incorporated by reference.

Preferably the olefin homo- or copolymer (A) is a $C_2$- to $C_8$- olefin (such as ethylene, propylene, 1-butene, 1-pentene, 1-hexene, 1-octene) homo- or copolymer, more preferably is an ethylene homo- or copolymer or propylene homo- or copolymer.

In case (A) is an ethylene homo- or copolymer the following temperatures and pressures are preferably applied during the process according to the invention.

As already defined above, for the purpose of the present invention the term "the at least one reactor" denotes the reactor or plurality of reactors the antioxidant (B) is fed to.

Preferably, the at least one reactor is operated at a temperature of at least 50 °C, more preferably of at least 60 °C, even more preferably of at least 70 °C and most preferably of at least 80 °C.

The at least one reactor is preferably operated at a temperature of 110 °C or less, more preferably of 100 °C or less and most preferably of 90 °C or less.

Further, preferably the at least one reactor is operated at a pressure of at least 10 bar, more preferably of at least 15 bar and most preferably at least 17 bar.

The at least one reactor is preferably operated at a pressure of 60 bar or less, more preferably 45 bar or less, even more preferably 30 bar or less and most preferably 23 bar or less.

The at least one reactor may be a loop or a gas phase reactor, preferably the at least one reactor is a gas phase reactor.

In case a propylene homo- or copolymer is produced the following temperatures and pressures are preferably applied during the process according to the invention.

As already defined above, for the purpose of the present invention the term "the at least one reactor" denotes the reactor or plurality of reactors the antioxidant (B) is fed to.

Preferably, the at least one reactor is operated at a temperature of at least 40 °C, more preferably of at least 50 °C, even more preferably of at least 60 °C and most preferably of at least 65 °C.

The at least one reactor is preferably operated at a temperature of 100 °C or less, more preferably of 90 °C or less, even more preferably 80 °C or less and most preferably of 75 °C or less.

Further, preferably the at least one reactor is operated at a pressure of at least 20 bar, more preferably of at least 30 bar and most preferably at least 35 bar.

The at least one reactor is preferably operated at a pressure of 60 bar or less, more preferably 50 bar or less and most preferably 45 bar or less.

The at least one reactor may be a loop or a gas phase reactor, preferably the at least one reactor is a loop reactor.

Unless otherwise explicitly stated to the contrary, in the following preferred features of all embodiments of the invention are described.

Component (B) may be fed in pure form or component (B) may be dissolved in a carrier before being fed, preferably, component (B) is dissolved in a carrier before being fed. The carrier may me selected from any solvent usable in olefin polymerisation processes. Alternatively, another liquid compound fed during the process may be used as carrier, such as liquid monomers (e.g. $C_6$ to $C_{20}$ alpha-olefins, e.g. 1-hexene, 1-octene), oil (e.g. used as carrier for antistatic oil), etc.

The solvent usable in olefin polymerisation processes is preferably is selected from non-polar solvents, more preferably is selected from aliphatic hydrocarbons, even more preferably from $C_3$- to $C_{10}$- aliphatic hydrocarbons, and most preferably from $C_4$- to $C_6$- aliphatic hydrocarbons, e.g. pentane.

Most preferably in case the olefin homo- or copolymer (A) is an ethylene homo- or copolymer component (B) is fed to the last reactor of the process.

The present invention is furthermore directed to a process for the production of a polyolefin composition comprising the following steps:

1. a) producing the stabilized polyolefin comprising components (A) and (B) according to the invention;
2. b) compounding the stabilized polyolefin with further additives.

Preferably said further additives are used in an amount of not more than 10 parts per weight (ppw) of additives based on 100 ppw of stabilized polyolefin, more preferably not more than 5 parts per weight (ppw) of additives based on 100 ppw of stabilized polyolefin.

The further additives are preferably selected from the group of modifiers and stabilizers, antistatic agents, lubricants, nucleating agents, foam nucleators and pigments and combinations thereof. Specifically, such additives include primary antioxidants like sterically hindered phenols and secondary antioxidants like phosphites, UV stabilizers like sterically hindered amines, acid scavengers, carbon black, pigment, alpha-nucleating agents like sodium 2,2'-methylene-bis-(4,6-di-tert-butylphenyl) phosphate or beta-nucleating agents like calcium pimelate, antistatic agents like glycerol monostearate, slip agents like oleamide and foam nucleators like talc.

Particularly preferred additives are carbon black and acid scavengers, preferably metal stearates such as calcium and zinc stearate.

Typically carbon black is used in a final amount of from 0.5 to 5 parts per weight(ppw), based on 100 ppw of stabilized polyolefin preferably from 1.5 to 3.0 parts per weight based on 100 ppw of stabilized polyolefin. Preferably the carbon black is added as a masterbatch, i.e. carbon black master batch (CBMB) where it is premixed with a polymer, preferably high density polyethylene (HDPE),

Acid scavengers are typically used in an amount of 0.05 to 1.00 parts per weight(ppw) based on 100 ppw of stabilized polyolefin and preferably are used in an amount of 0.05 to 0.50 parts per weight based on 100 ppw of stabilized polyolefin.

Still further, the present invention is directed to the use of an antioxidant (B) in a process for the production of a stabilized polyolefin according to claim 7.

In a further aspect, the present invention is directed to the use of an antioxidant (B) selected from vitamin E-type stabilisers according to claim 8.

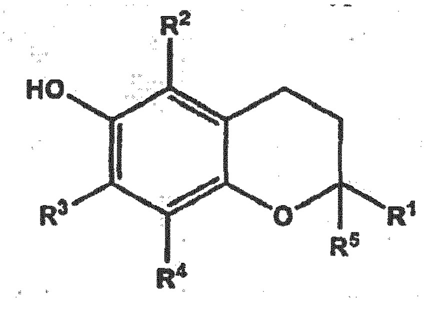

(I)

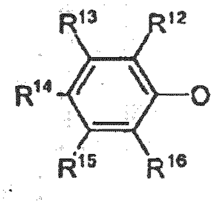

(II).

## Examples

### Definition of the test methods:

Melt flow rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The melt flow rate of polyethylene is determined at 190 °C and under a load of 2.16 kg ($MFR_2$), 5.00 kg ($MFR_5$) and 21.6 kg ($MFR_{21}$) for PP, a load of 2.16 kg is applied and the determination is made at 230°C.

### Density

Density of the polymer was measured according to ISO 1183-1:2004, method A on compression moulded specimen prepared according to EN ISO 1872-2(February 2007) and is given in kg/$m^3$.

### Taste

### Taste and/or Odour testing (organoleptic testing)

For the purpose of determining the emission of taste-causing substances from different plastic materials, several materials have been tested while using a taste panel. The material was pelletized in conjunction with the extrusion and put in clean glass bottles in order to conserve the taste and odour level.

### Sample preparation

A sample of 32 g pellets was taken for each test. The pellet sample is placed in a Büchner funnel and rinsed with reference water for one minute. The granules are transferred to an Erlenmeyer flask with ground joint containing a magnetic bar and the flask is filled with reference water and closed with a glass plug. The ratio between granules and water volume should be 32 g/1000ml. It is important that no air bubbles appear between the glass plug and the granules.

The flask is placed for 4 hours in a magnetic agitator bath with a temperature of 30 °C ± 1 °C for polyethylene material (polypropylene material: bath has a temperature of 70°C ± 1 °C) and with a good stirring speed. After the extraction, the test water is poured into a glass bottle with ground joint and closed with a glass plug. The bottle is left over night. The next day the organoleptic test can be performed. The reference water is prepared as described above but without granules. The difference in temperature between the test water and the reference water may not exceed 0.5 °C.

The organoleptic panel shall consist of 5 or more participants for the taste test and 3 or more participants for the odour test. The participants shall be trained and familiar with taste/odour judgement of water samples. The test water was diluted according to table below:

| Sample | Test water (ml) = X | Dilution water (ml) = Y | Dilution level = Taste/odour level = (X+Y)/X |
|---|---|---|---|
| 1 | 400 | 0 | 1 |
| 2 | 267 | 133 | 1.5 |
| 3 | 200 | 200 | 2 |
| 4 | 100 | 300 | 4 |

Calculation of taste/odour level is performed according to formula:

$$(X+Y)/X = \text{taste/odour level},$$

wherein:

X = volume (ml) of the test water in the mixture, where the taste and odour can be detected.

Y = volume of dilution water, which is used in the mixture (total) volume X + Y = 400 ml. The dilution water shall have the same quality as the reference water.

The test water samples, 1 - 4, are transferred to plastic cups and placed in front of each participant. Place the cups in a system, where the degree of test water in the samples increases gradually, i.e. sample no 4 as the first sample and sample no 1 as the last sample.

Fill 4 cups with reference water, which are placed in pairs with diluted samples. Next to these samples, place a cup with known reference water (0 - sample). The task for the participant in the panel is to compare to known reference water with the coded samples in each pair of cups.

The participant will decide if the two samples in each pair are equal or if any of the samples have an annoying taste/odour. In a protocol, the participant indicates with a cross if any of the samples pairs have an annoying taste/odour. The procedure is to start with sample pair no. 4 and conclude with sample pair no. 1, i.e. any possible taste/odour annoying components are gradually increasing. A protocol for taste/odour test is enclosed.

The result from the taste/odour test is recorded in a protocol and evaluated. The highest dilution level, for which a majority of the panelists record taste or odour, becomes the result of the taste / odour test. As an example, if 3 out of 5 panelist record taste at a dilution level of 1.5, but just 2 out of 5 record taste at dilution level 2, the result of the taste test becomes 1.5-2. (The majority feel taste at dilution level 1.5 but not a dilution level 2, thus the "true" taste level is somewhere between 1.5 and 2)

The following taste/odour levels exist; <1, 1-1.5, 1.5-2, 2-4, >4

Example of different taste/odour points and corresponding taste/odour levels with 5 participants in the organoleptic panel,

| taste/odour points | taste/odour level |
|---|---|
| 2110 | <1 |
| 3210 | 1 - 1.5 |
| 3321 | 1.5 - 2 |
| 5430 | 2 - 4 |
| 5533 | >4 |

The border line for a material to be approved concerning taste/odour is typically 1.5-2.

As a complement, a normalized model (POH2n) generating a decimal taste/odour value, has been used. Based on experience the normalized POH2n model generates values that better reflect the true taste/odour level than the discrete taste/odour levels described above and thus provides for a more sensitive method to better discriminate between the different taste/odour levels. Moreover, a decimal value obviously gives a higher resolution, which is valuable when analyzing taste and odour.

The normalized POH2n model is now further explained by the following equation [1]:

$$\text{taste/odour}_{POH2n} = ((a-b)\cdot 1.25 + (b-c)\cdot 1.75 + (c-d)\cdot 3 + d\cdot 5) / P \qquad [1]$$

and description, wherein a, b, c, and d are the number of panelists feeling taste/odour at particular dilution levels of 1, 1.5, 2 and 4, respectively, corresponding to the taste points, and P is the total number of panelists. P is typically 5 for taste testing and 3 for odour testing. Examples of different taste/odour testing and corresponding results using the POH2n model with 5 participants in the organoleptic panel is now shown.

| Taste points / Sample | 1 | 1.5 | 2 | 4 | POH2n taste/odour result |
|---|---|---|---|---|---|
| 1 | 2 | 1 | 1 | 0 | 0.85 |
| 2 | 3 | 2 | 1 | 0 | 1.2 |
| 3 | 3 | 3 | 2 | 1 | 1.95 |
| 4 | 5 | 4 | 3 | 0 | 2.4 |
| 5 | 5 | 5 | 3 | 3 | 3.7 |
| Panellists | a | b | c | d | |

According to which property is tested the number of panelist P is 5 for taste-testing and 3 for odour-testing.
Exemplified calculations for samples 1, 3 and 5 using the POH2n model ((a-b)·1.25 + (b-c)·1.75 + (c-d)·3 + d·5) / P = taste/odour POH2n

**In sample 1:**

| | |
|---|---|
| Two (2) panelists felt taste at taste point 1; | a=2 |
| One (1) panelists felt taste at taste point 1.5; | b=1 |
| One (1) panelists felt taste at taste point 2; | c=1 |
| Zero (0) panelist felt taste at taste point 4; | d=0 |

Taste-testing P=5
According equation [1]

$$((2-1)\cdot 1.25 + (1-1)\cdot 1.75 + (1-0)\cdot 3 + 0\cdot 5) / 5 = 0.85$$

In sample 3:

$$a=3,\ b=3,\ c=2,\ d=1;\ P=5$$

$$((3-3)\cdot 1.25 + (3-2)\cdot 1.75 + (2-1)\cdot 3 + 1\cdot 5) / 5 = 1.95$$

In sample 5:

$$a=5,\ b=5,\ c=3,\ d=3,\ P=5$$

$$((5-5)\cdot 1.25 + (5-3)\cdot 1.75 + (3-3)\cdot 3 + 3\cdot 5) / 5 = 3.7$$

**Comparative example CE1 to CE3 inventive examples IE1 to IE3 (polyethylenes):**

The details of the production process are given in table 1 below. As catalyst the catalyst of example 1 of EP 1 655 335 has been used (Lynx 200 from BASF).
In Inventive examples IE1 to IE3 Irganox E201 (3,4-Di-hydro-2,5,7,8-tetramethyl-2-(4,8,12-trimethyltridecyl)-2H-1-benzopyran-6-ol) [CAS-no. 10191-41-0] distributed by Ciba Specialty Chemicals has been added to the gas phase reactor during polymerisation in the amount given in table 3.

Table 1:

| | | | CE1 | CE2 | CE3 | IE1 | IE2 | IE3 |
|---|---|---|---|---|---|---|---|---|
| Prepolymerisation | Temperature | °C | 60 | 60 | 60 | 60 | 60 | 60 |
| | Pressure | bar | 59 | 59 | 58 | 58 | 58 | 58 |
| | Production rate | kg/h | 1.9 | 1.9 | 1.9 | 1.9 | 1.7 | 1.9 |
| | split | wt-% | 2 | 2 | 2 | 2 | 2 | 2 |
| Loop reactor | Temperature | °C | 95 | 95 | 95 | 95 | 95 | 95 |
| | Pressure | bar | 57 | 57 | 56 | 56 | 56 | 56 |
| | Ethylene concentration | mol-% | 4.1 | 4.1 | 3.8 | 3.7 | 4.0 | 3.8 |
| | $H_2/C_2$ ratio | mol/kmol | 570 | 552 | 551 | 557 | 495 | 503 |
| | Split | wt-% | 46 | 46 | 46 | 46 | 46 | 47 |
| | Production rate | kg/h | 35.1 | 34.7 | 35.3 | 35.5 | 35.6 | 35.7 |
| Gas Phase Reactor (GPR) | Temperature | °C | 85 | 85 | 85 | 85 | 85 | 85 |
| | Pressure | bar | 20 | 20 | 20 | 20 | 20 | 20 |
| | Ethylene concentration | mol-% | 12.8 | 15.4 | 13.4 | 12.7 | 13.9 | 13.4 |
| | $H_2/C_2$ ratio | mol/kmol | 23 | 35 | 37 | 41 | 37 | 39 |
| | $C_4/C_2$ ratio | mol/kmol | 256 | 212 | 198 | 227 | 239 | 242 |
| | Split | wt-% | 52 | 52 | 52 | 52 | 52 | 51 |
| | Production rate | kg/h | 38 | 39 | 41 | 40 | 39 | 39 |
| | Irganox E201 as liquid to GPR*) | g/h | n.a. | n.a. | n.a. | 14 | 10.3 | 9.4 |

*) solution in pentane

The polymers were compounded in a counter-rotating twin-screw extruder (JSW CIM90P distributed by Japan Steel Works) with the additives and under the conditions given in table 2 and 3 below.

Table 2:

| | | | CE1 | CE2 | CE3 | IE1 | IE2 | IE3 |
|---|---|---|---|---|---|---|---|---|
| Extrusion | SEI | kWh/t | 247 | 230 | 232 | 224 | 234 | 224 |
| | Melt temperature | °C | 252 | 260 | 254 | 253 | 247 | 252 |

Table 3:

| | | | CE1 | CE2 | CE3 | IE1 | IE2 | IE3 |
|---|---|---|---|---|---|---|---|---|
| Additives | Irganox 1330 | ppm | | | 1100 | | | |
| | Irgafos 168 | ppm | 1100 | | | | 1100 | |
| | Irganox 1010 | ppm | 1100 | 1100 | | 1100 | 1100 | |
| | Irganox E201 mixed as MB* | ppm | | 250 | 250 | | | |
| | Irganox E201 | ppm | | | | 350 | 265 | 240 |
| | CaSt | ppm | 1500 | 1500 | 1500 | 1500 | 1500 | 1500 |
| | CBMB | % | 5.75 | 5.75 | 5.75 | 5.75 | 5.75 | 5.75 |

B225 : Irganox B225 distributed by Ciba Specialty Chemicals (now BASF), which is a mixture of 50 wt. % Irgafos 168 (Tris(2,4-di-tert-butylphenyl)phosphite) [CAS-no. 31570-04-4] and 50 wt. % Irganox 1010 (Pentaerythritol Tetrakis(3-(3,5-di-tert-butyl-4-hydroxyphenyl)propionate) [CAS-no. 6683-19-8]

E201: Irganox E201 distributed by Ciba Specialty Chemicals (now BASF) is alpha-tocopherol (2,5,7,8-Tetramethyl-2(4',8',12'-trimethyltridecyl)-chroman-6-ol) [CAS-no. 10191-41-0]

Irganox 1330: distributed by Ciba Specialty Chemicals (now BASF), is 3,3',3',5,5',5'-hexa-tert-butyl-a,a',a'-(mesitylene-2,4,6-triyl)tri-p-cresol [CAS-no. 1709-70-2]

Irganox 1010: distributed by Ciba Specialty Chemicals (now BASF), is Pentaerythritol Tetrakis(3-(3,5-di-*tert*-butyl-4-hydroxyphenyl)propionate [CAS-no. 6683-19-8]

Irgafos 168: distributed by Ciba Specialty Chemicals (now BASF), is Tris(2,4-di-*tert*-butylphenyl)phosphite [CAS-no. 31570-04-4]

Carbon black: A masterbatch containing 39.5 wt.% carbon black (Elftex TP, distributed by Cabot), 0.1 wt.% Pentaerythrityl-tetrakis(3-(3',5'-di-tert. butyl-4-hydroxyphenyl)-propionate (commercially available as Irganox 1010 from Ciba, now part of BASF) and 60.4 wt.% BCL-5931 (which is an ethylene-butylene compolymer having a comonomer content of 1.7 wt.%, an $MFR_2$ (2.16 kg, 190°C, ISO 1133) of 30g/10 min, has been used.

CaSt: CAS 1592-23-0, Calcium stearate SP distributed by Faci

Grinsted PS432: A blend of polyglycerol ester made from edible, refined vegetable fatty acids and acetic acid ester of monoglycerides made from fully hydrogenated castor oil supplied by Danisco A/S

Mineral oil: white mineral oil delivered by OY Shell AB

As can be seen from table 3, no further antioxidant was added to inventive example 3 during compounding.

The final properties after compounding (according Table 3) and extrusion (pelletizing step) are given in table 4 below

Table 4:

| Polymer properties | | CE1 | CE2 | CE3 | IE1 | IE2 | IE3 |
|---|---|---|---|---|---|---|---|
| MFR5 | g/10min | 1.2 | 0.92 | 1.0 | 1.3 | 1.3 | 1.2 |
| MFR21 | g/10min | 31 | 22 | 27 | 31 | 31 | 31 |
| FRR21/5 | | 26 | 24 | 27 | 24 | 24 | 26 |
| Density pellet | kg/m³ | 952.9 | 951.3 | 952.9 | 951.9 | 951.8 | 953.0 |

Taste results are give in table 5

Table 5:

| Taste | CE1 | CE2 | CE3 | IE1 | IE2 | IE3 |
|---|---|---|---|---|---|---|
| Taste results | | | | | | |
| POH2n Taste Tool | 2.55 | 2.9 | 2.1 | 1.2 | 1.45 | 0.6 |
| Common Taste Tool | 1-1.5 | 2-4 | 1-1.5 | 1-1.5 | 1-1.5 | <1 |

The taste test results form table 5 clearly reflect that the inventive examples IE1- IE3 have improved taste properties. This is also confirmed by either test methods for determining the organoleptic properties.

**Polypropylene**

Examples CE4, CE5 and reference examples RE4 to RE9 were prepared using a prepolymerisation-loop-loop reactor sequence wherein the following polymerisation conditions were applied. As catalyst ZNM1, supplied by Basell has been used

table 6

| | | | |
|---|---|---|---|
| Prepolymerisation | temperature | °C | 25 |
| | pressure | bar | 38 |
| | propylene feed | t/h | 2 |
| | Split | wt.% | 1 |
| 1st Loop Reactor | temperature | °C | 69 |
| | pressure | bar | 38 |
| | propylene feed | t/h | 24.5 |
| | ethylene feed | kg/h | 625 |
| | $H_2$ feed | g/h | 27 |
| | Split | wt.% | 60 |
| 2nd Loop reactor | temperature | °C | 69 |
| | pressure | bar | 38 |
| | propylene feed | t/h | 21 |
| | ethylene feed | kg/h | 343 |
| | $H_2$ feed | g/h | 885 |
| | Split | wt.% | 39 |

No comonomers or hydrogen have been fed in the prepoylmerisation step.

The compounding of the composition together with the following additives

| | |
|---|---|
| Irganox 1330: | 0.25wt%; |
| Irganox 1010: | 0.25wt%; |
| Irgafos 168: | 0.1 wt%; |
| CaSt: | 0.07wt% |

was effected in a ZSK250 extruder supplied by Werner & Pfleiderer, having a screw diameter of 251 mm with a specific energy input of 230 kWh/t and the melt temperature before the die plate was 270 °C.

The $MFR_2$ of the polymer of examples CE4, CE5 and reference examples RE4 to RE9 is 0.3 g/10 min.

In reference examples RE4 to RE9 a mixture of Irganox E201 with Grinsted PS432 in mineral oil in a volume ratio Grinsted PS432:mineral oil:Irganox E201 of 1:1:2 was added to the flash line between the second reactor and the flash vessel (where depressurization is effected). The feeding point is located just after the outlet valve of the 2nd loop reactor.

The feeding rate of the mixture (Grinsted PS432:mineral oil:Irganox E201) was 6 kg/h corresponding to an amount of about 100 ppm Irganox E201 in the final polymer.

Taste results are given in table 7

Table 7:

| | | CE4 | CE5 | RE4 | RE5 | RE6 | RE7 | RE8 | RE9 |
|---|---|---|---|---|---|---|---|---|---|
| Taste | Taste results | | | | | | | | |
| | POH2n Taste Tool | 2.55 | 3 | 0.5 | 1.7 | 0.85 | 1 | 1.7 | 0.25 |
| | Common Taste Tool | 2 | 4 | 1 | 1.5 | 1.5 | 1.5 | 2 | 1 |

## Claims

1. A process for the production of a stabilized polyolefin comprising

   - an olefin homo- or copolymer (A); and
   - an antioxidant (B) wherein

   olefin homo- or copolymer (A) is produced in a process carried out in one or more reactors, and the antioxidant (B) is fed to the polymer and/or unreacted monomers during the process while polymer and/or unreacted monomers is/are present prior to a post-production step being a the catalyst deactivation step whereby the catalyst used for producing the olefin homo- or copolymer is selected from coordination catalysts of a transitions metal, such as Ziegler-Natta catalysts, single site catalysts including metallocene- and non-metallocene based catalysts, chromium based catalysts and further suitable catalysts,
   wherein the process is a carried out in at least two reactors connected in series and
   wherein component (B) is fed to the second and/or any subsequent reactor, if present.

2. A process for the production of a stabilized polyolefin comprising

   - an olefin homo- or copolymer (A); and
   - an antioxidant (B) wherein

   olefin homo- or copolymer (A) is produced in a process carried out in one or
   more reactors, and the antioxidant (B), selected from vitamin E-type stabilisers according to formula (I):

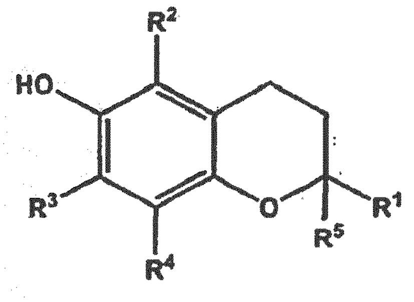

(I)

wherein $R^1$, $R^2$, $R^3$, $R^4$ and $R^5$ independently are H, or non-substituted or substituted aliphatic or aromatic hydrocarbyl radicals which may comprise heteroatoms; or
selected from phosphorous containing stabilizers with general formula $R^{11}$-$P(OAr)_2$, wherein OAr is according to formula (II)

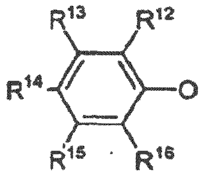

(II)

wherein

- $R^{11}$ is a non-substituted or substituted aliphatic or aromatic hydrocarbyl radical which may comprise heteroatoms,
- $R^{12}$, $R^{13}$, $R^{14}$, $R^{15}$ and $R^{16}$ independently are a hydrogen atom or non-substituted or substituted aliphatic or aromatic hydrocarbyl radicals which may comprise heteroatoms,

or mixtures thereof
is fed during the process prior to a post-production step being a catalyst deactivation step,
wherein the process is a carried out in at least two reactors connected in series and
wherein component (B) is fed to the second and/or any subsequent reactor, if present.

**3.** The process according to claims 1, wherein the antioxidant (B) is selected from vitamin E-type stabilisers according to formula (I):

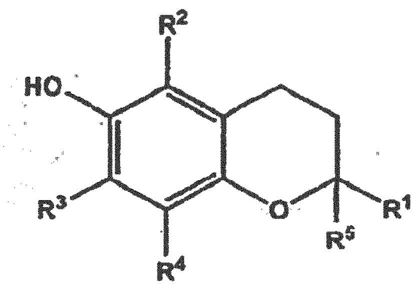

(I)

wherein $R^1$, $R^2$, $R^3$, $R^4$ and $R^5$ independently are H, or non-substituted or substituted aliphatic or aromatic hydrocarbyl radicals which may comprise heteroatoms; or
is selected from phosphorous containing stabilizers with general formula $R^{11}$-$P(OAr)_2$, wherein OAr is according to formula (II)

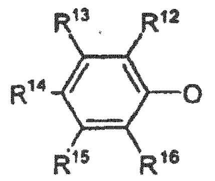

(II)

wherein

- $R^{11}$ is a non-substituted or substituted aliphatic or aromatic hydrocarbyl radical which may comprise heteroatoms,
- $R^{12}$, $R^{13}$, $R^{14}$, $R^{15}$ and $R^{16}$ independently are a hydrogen atom or non-substituted or substituted aliphatic or aromatic hydrocarbyl radicals which may comprise heteroatoms,

or mixtures thereof.

**4.** The process according to any one of the preceding claims wherein component (B) is used in an amount of not more than 0.095 parts per weight based on 100 parts per weight of (A) + (B).

**5.** The process according to any one of the preceding claims wherein the olefin homo- or copolymer is a $C_2$- to $C_6$-olefin homo- or copolymer.

**6.** A process for the production of a polyolefin composition comprising the following steps:

a) producing the stabilized polyolefin comprising components (A) and (B) according to any one of the preceding claims 1 to 85;
b) compounding the stabilized polyolefin with further additives.

**7.** Use of an antioxidant (B) in a process for the production of a stabilized polyolefin comprising

- an olefin homo- or copolymer (A); and
- an antioxidant (B)

prior to, a post-production step being a catalyst deactivation step while polymer and/or unreacted monomers is/are present,
wherein the process is a carried out in at least two reactors connected in series and
wherein component (B) is fed to the second and/or any subsequent reactor, if present.

**8.** Use of an antioxidant (B) selected from vitamin E-type stabilisers according to formula (I):

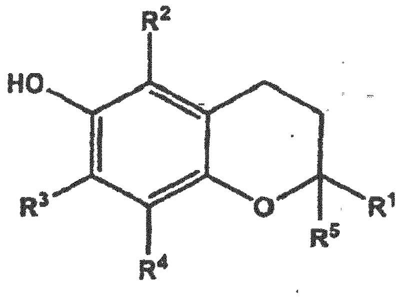

(I)

wherein $R^1$, $R^2$, $R^3$, $R^4$ and $R^5$ independently are H, or non-substituted or substituted aliphatic or aromatic hydrocarbyl radicals which may comprise heteroatoms; or
selected from phosphorous containing stabilizers with general formula $R^{11}$-$P(OAr)_2$, wherein OAr is according to formula (II)

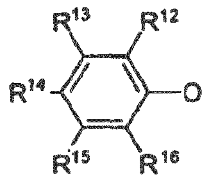

(II)

wherein

- $R^{11}$ is a non-substituted or substituted aliphatic or aromatic hydrocarbyl radical which may comprise heteroatoms,
- $R^{12}$, $R^{13}$, $R^{14}$, $R^{15}$ and $R^{16}$ independently are a hydrogen atom or non-substituted or substituted aliphatic or aromatic hydrocarbyl radicals which may comprise heteroatoms,

or mixtures thereof
in a process for the production of a stabilized polyolefin comprising

- an olefin homo- or copolymer (A); and
- an antioxidant (B)

during the process prior to a post-production step being a catalyst deactivation step,
wherein the process is a carried out in at least two reactors connected in series and
wherein component (B) is fed to the second and/or any subsequent reactor, if present.

**Patentansprüche**

**1.** Verfahren zur Herstellung eines stabilisierten Polyolefins, umfassend

- ein Olefinhomo- oder Olefincopolymer (A); und
- ein Antioxidans (B), wobei

das Olefinhomo- oder Olefincopolymer (A) in einem Verfahren hergestellt wird, das in ein oder mehreren Reaktoren durchgeführt wird, und wobei das Antioxidans (B) dem Polymer und/oder nicht-reagierten Monomeren während des Verfahrens, währenddessen das Polymer und/oder die nicht-reagierten Monomere vorliegen, zugeführt wird, und zwar vor einem Post-Herstellungsschritt, der ein Katalysatordeaktivierungsschritt ist,
wobei der Katalysator, der für das Herstellen des Olefinhomo- oder Olefincopolymers verwendet wird, aus Koordinationskatalysatoren eines Übergansmetalls ausgewählt ist, wie zum Beispiel Ziegler-Natta-Katalysatoren, Single-Site-Katalysatoren, einschließlich von Metallocen-basierten und Nicht-Metallocen-basierten Katalysatoren, chrombasierten Katalysatoren und weiteren geeigneten Katalysatoren,
wobei das Verfahren in mindestens zwei Reaktoren durchgeführt wird, die in Reihe verbunden sind, und
wobei der Bestandteil (B) dem zweiten und/oder irgendeinem anschließenden Reaktor, falls dieser vorhanden ist, zugeführt wird.

**2.** Verfahren zur Herstellung eines stabilisierten Polyolefins, umfassend

- ein Olefinhomo- oder Olefincopolymer (A); und
- ein Antioxidans (B), wobei

das Olefinhomo- oder Olefincopolymer (A) in einem Verfahren hergestellt wird, das in ein oder mehreren Reaktoren durchgeführt wird, und wobei das Antioxidans (B),
das aus Stabilisatoren des Vitamin-E-Typs gemäß der Formel (I) ausgewählt ist:

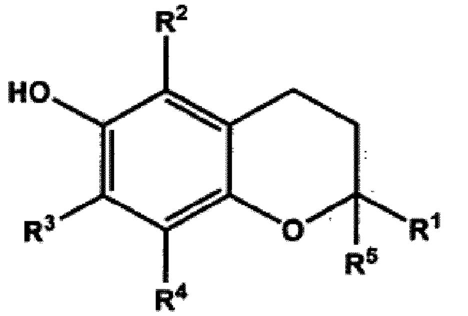

(I)

worin $R^1$, $R^2$, $R^3$, $R^4$ und $R^5$ unabhängig H oder unsubstituierte oder substituierte aliphatische oder aromatische Kohlenwasserstoffradikale sind, die Heteroatome umfassen können; oder das aus phosphorhaltigen Stabilisatoren mit der allgemeinen Formel $R^{11}$-$P(OAr)_2$ ausgewählt ist, wobei OAr der Formel (II) entspricht:

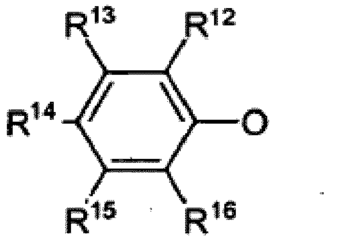

(II)

worin

- $R^{11}$ ein unsubstituiertes oder substituiertes aliphatisches oder aromatisches Kohlenwasserstoffradikal ist, das Heteroatome umfassen kann, und
- $R^{12}$, $R^{13}$, $R^{14}$, $R^{15}$ und $R^{16}$ unabhängig ein Wasserstoffatom oder unsubstituierte oder substituierte aliphatische oder aromatische Kohlenwasserstoffradikale sind, die Heteroatome umfassen können, oder aus Mischungen davon,

während des Verfahren zugeführt wird, und zwar vor einem Post-Herstellungsschritt, der ein Katalysatordeaktivierungsschritt ist,
wobei das Verfahren in mindestens zwei Reaktoren durchgeführt wird, die in Reihe verbunden sind, und
wobei der Bestandteil (B) dem zweiten und/oder irgendeinem anschließenden Reaktor, falls dieser vorhanden ist, zugeführt wird.

**3.** Verfahren nach Anspruch 1, wobei das Antioxidans (B) aus Stabilisatoren des Vitamin-E-Typs gemäß der Formel (I) ausgewählt ist:

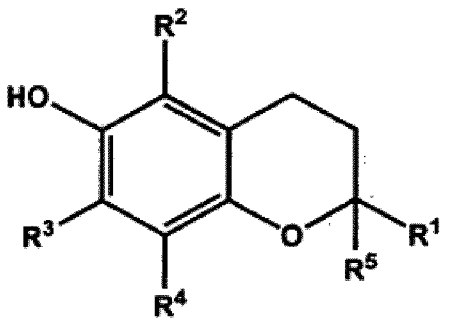

(I)

worin $R^1$, $R^2$, $R^3$, $R^4$ und $R^5$ unabhängig H oder unsubstituierte oder substituierte aliphatische oder aromatische Kohlenwasserstoffradikale sind, die Heteroatome umfassen können; oder

aus phosphorhaltigen Stabilisatoren mit der allgemeinen Formel $R^{11}$-$P(OAr)_2$ ausgewählt ist, wobei OAr der Formel (II) entspricht:

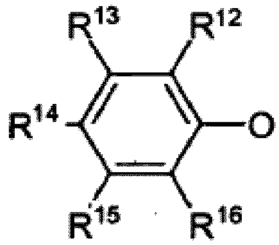

(II)

worin

- $R^{11}$ ein unsubstituiertes oder substituiertes aliphatisches oder aromatisches Kohlenwasserstoffradikal ist, das Heteroatome umfassen kann, und
- $R^{12}$, $R^{13}$, $R^{14}$, $R^{15}$ und $R^{16}$ unabhängig ein Wasserstoffatom oder unsubstituierte oder substituierte aliphatische oder aromatische Kohlenwasserstoffradikale sind, die Heteroatome umfassen können, oder aus Mischungen davon.

**4.** Verfahren nach einem der vorhergehenden Ansprüche, wobei der Bestandteil (B) mit einer Menge von nicht mehr als 0,095 Gewichtsanteilen, basierend auf 100 Gewichtsanteilen von (A) + (B), verwendet wird.

**5.** Verfahren nach einem der vorhergehenden Ansprüche, wobei das Olefinhomo- oder Olefincopolymer ein $C_2$ - $C_6$ Olefinhomo- oder Olefincopolymer ist.

**6.** Verfahren zur Herstellung einer Polyolefinzusammensetzung, umfassend die folgenden Schritte:

a) Herstellen des stabilisierten Polyolefins, umfassend die Bestandteile (A) und (B) gemäß einem der vorhergehenden Ansprüche 1 bis 5; und
b) Compoundieren des stabilisierten Polyolefins mit weiteren Additiven.

**7.** Verwendung eines Antioxidans (B) in einem Verfahren zur Herstellung eines stabilisierten Polyolefins, umfassend

- ein Olefinhomo- oder Olefincopolymer (A); und
- ein Antioxidans (B),

vor einem Post-Herstellungsschritt, der ein Katalysatordeaktivierungsschritt ist, und zwar währenddessen das Polymer und/oder die nicht-reagierten Monomere vorliegt/en,
wobei das Verfahren in mindestens zwei Reaktoren durchgeführt wird, die in Reihe verbunden sind, und
wobei der Bestandteil (B) dem zweiten und/oder irgendeinem anschließenden Reaktor, falls dieser vorhanden ist, zugeführt wird.

**8.** Verwendung eines Antioxidans (B), das aus Stabilisatoren des Vitamin-E-Typs gemäß der Formel (I) ausgewählt ist:

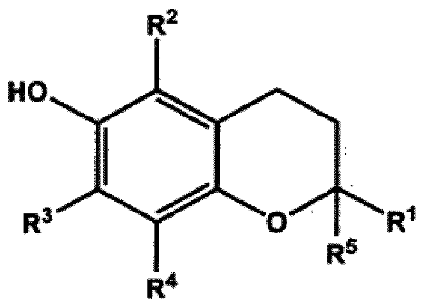

worin $R^1$, $R^2$, $R^3$, $R^4$ und $R^5$ unabhängig H oder unsubstituierte oder substituierte aliphatische oder aromatische

Kohlenwasserstoffradikale sind, die Heteroatome umfassen können; oder
aus phosphorhaltigen Stabilisatoren mit der allgemeinen Formel $R^{11}$-P(OAr)$_2$ ausgewählt ist, wobei OAr der Formel (II) entspricht:

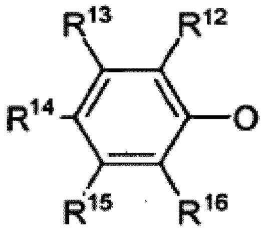

(II)

worin

- $R^{11}$ ein unsubstituiertes oder substituiertes aliphatisches oder aromatisches Kohlenwasserstoffradikal ist, das Heteroatome umfassen kann, und
- $R^{12}$, $R^{13}$, $R^{14}$, $R^{15}$ und $R^{16}$ unabhängig ein Wasserstoffatom oder unsubstituierte oder substituierte aliphatische oder aromatische Kohlenwasserstoffradikale sind, die Heteroatome umfassen können,

oder aus Mischungen davon,
in einem Verfahren zur Herstellung eines stabilisierten Polyolefins, umfassend

- ein Olefinhomo- oder Olefincopolymer (A); und
- ein Antioxidans (B),

während des Verfahrens, und zwar vor einem Post-Herstellungsschritt, der ein Katalysatordeaktivierungsschritt ist, wobei das Verfahren in mindestens zwei Reaktoren durchgeführt wird, die in Reihe verbunden sind, und
wobei der Bestandteil (B) dem zweiten und/oder irgendeinem anschließenden Reaktor, falls dieser vorhanden ist, zugeführt wird.

**Revendications**

**1.** Procédé de production d'une polyoléfine stabilisée comprenant

- un homo- ou un copolymère d'oléfine (A) ; et
- un antioxydant (B) dans lequel

l'homo- ou le copolymère d'oléfine (A) est produit dans un procédé réalisé dans un ou plusieurs réacteurs, et l'antioxydant (B) est apporté au polymère et/ou aux monomères n'ayant pas réagi au cours du procédé alors que le polymère et/ou les monomères n'ayant pas réagi est/sont présent(s) avant une étape de post-production étant une étape de désactivation du catalyseur moyennant quoi le catalyseur utilisé pour produire l'homo- ou le copolymère d'oléfine est choisi parmi les catalyseurs de coordination d'un métal de transition, tels que les catalyseurs de type Ziegler-Natta, les catalyseurs à un seul site incluant les catalyseurs de type métallocènes et non-métallocènes, les catalyseurs à base de chrome et autres catalyseurs adéquats,
lequel procédé est un procédé réalisé dans au moins deux réacteurs reliés en série, et
dans lequel le composant (B) est apporté au deuxième réacteur et/ou à tout réacteur subséquent, le cas échéant.

**2.** Procédé de production d'une polyoléfine stabilisée comprenant

- un homo- ou un copolymère d'oléfine (A) ; et
- un antioxydant (B) dans lequel

l'homo- ou le copolymère d'oléfine (A) est produit dans un procédé réalisé dans un ou plusieurs réacteurs, et l'antioxydant (B),
choisi parmi les stabilisateurs de type vitamine E répondant à la formule (I) :

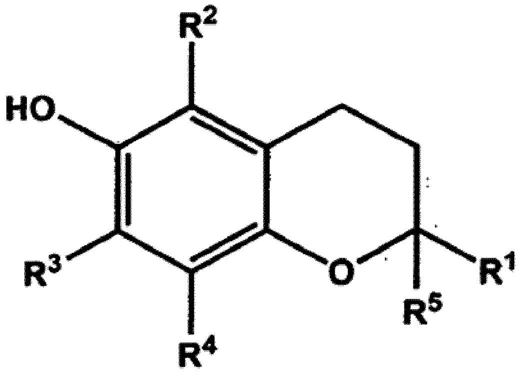

(I)

dans laquelle $R^1$, $R^2$, $R^3$, $R^4$ et $R^5$ représentent indépendamment un atome d'H ou des radicaux hydrocarbyles aliphatiques ou aromatiques, non substitués ou substitués, qui peuvent comprendre des hétéroatomes ; ou choisi parmi les stabilisateurs contenant du phosphore répondant à la formule générale $R^{11}$-P(OAr)$_2$, dans laquelle OAr répond à la formule (II)

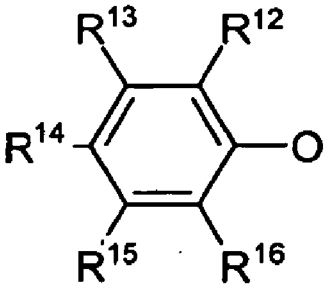

(II)

dans laquelle

- $R^{11}$ représente un radical hydrocarbyle aliphatique ou aromatique, non substitué ou substitué, qui peut comprendre des hétéroatomes,
- $R^{12}$, $R^{13}$, $R^{14}$, $R^{15}$ et $R^{16}$ représentent indépendamment un atome d'hydrogène ou des radicaux hydrocarbyles aliphatiques ou aromatiques, non substitués ou substitués, qui peuvent comprendre des hétéroatomes, ou des mélanges de ceux-ci

est apporté au cours du procédé avant une étape de post-production étant une étape de désactivation du catalyseur, lequel procédé est un procédé réalisé dans au moins deux réacteurs reliés en série, et
dans lequel le composant (B) est apporté au deuxième réacteur et/ou à tout réacteur subséquent, le cas échéant.

**3.** Procédé selon la revendication 1, dans lequel l'antioxydant (B) est choisi parmi les stabilisateurs de type vitamine E répondant à la formule (I) :

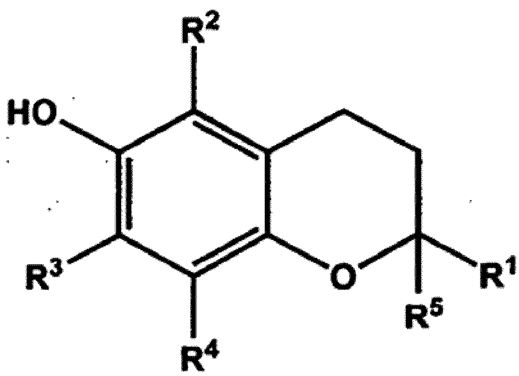

(I)

dans laquelle $R^1$, $R^2$, $R^3$, $R^4$ et $R^5$ représentent indépendamment un atome d'H ou des radicaux hydrocarbyles aliphatiques ou aromatiques, non substitués ou substitués, qui peuvent comprendre des hétéroatomes ; ou est choisi parmi les stabilisateurs contenant du phosphore répondant à la formule générale $R^{11}-P(OAr)_2$, dans laquelle OAr répond à la formule (II)

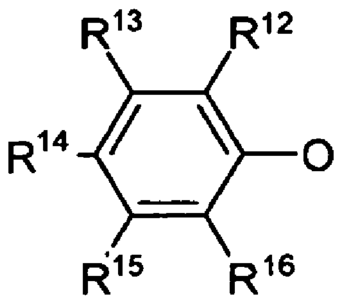

(II)

dans laquelle

- $R^{11}$ représente un radical hydrocarbyle aliphatique ou aromatique, non substitué ou substitué, qui peut comprendre des hétéroatomes,
- $R^{12}$, $R^{13}$, $R^{14}$, $R^{15}$ et $R^{16}$ représentent indépendamment un atome d'hydrogène ou des radicaux hydrocarbyles aliphatiques ou aromatiques, non substitués ou substitués, qui peuvent comprendre des hétéroatomes,

ou des mélanges de ceux-ci.

**4.** Procédé selon l'une quelconque des revendications précédentes dans lequel le composant (B) est utilisé à une quantité d'au plus 0,095 partie en poids sur la base de 100 parties en poids de (A) + (B).

**5.** Procédé selon l'une quelconque des revendications précédentes dans lequel l'homo- ou le copolymère d'oléfine est un homo- ou un copolymère d'oléfine en $C_2$ à $C_6$.

**6.** Procédé de production d'une composition de polyoléfine comprenant les étapes suivantes :

a) production de la polyoléfine stabilisée comprenant les composants (A) et (B) selon l'une quelconque des revendications précédentes 1 à 5 ;
b) mélangeage de la polyoléfine stabilisée avec d'autres additifs.

**7.** Utilisation d'un antioxydant (B) dans un procédé de production d'une polyoléfine stabilisée comprenant

- un homo- ou un copolymère d'oléfine (A) ; et
- un antioxydant (B)

avant une étape de post-production étant une étape de désactivation du catalyseur alors que le polymère et/ou les monomères n'ayant pas réagi est/sont présent(s),
lequel procédé est un procédé réalisé dans au moins deux réacteurs reliés en série, et
dans lequel le composant (B) est apporté au deuxième réacteur et/ou à tout réacteur subséquent, le cas échéant.

**8.** Utilisation d'un antioxydant (B) choisi parmi les stabilisateurs de type vitamine E répondant à la formule (I) :

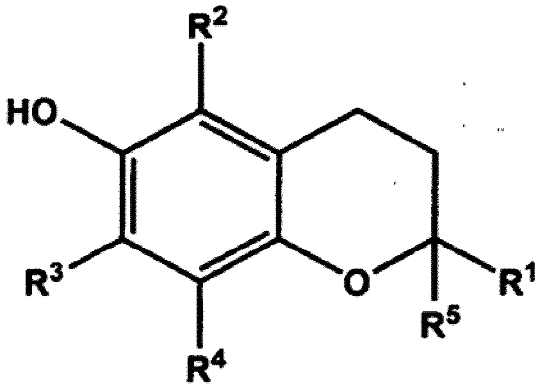

(I)

dans laquelle $R^1$, $R^2$, $R^3$, $R^4$ et $R^5$ représentent indépendamment un atome d'H ou des radicaux hydrocarbyles aliphatiques ou aromatiques, non substitués ou substitués, qui peuvent comprendre des hétéroatomes ; ou choisi parmi les stabilisateurs contenant du phosphore répondant à la formule générale $R^{11}$-P(OAr)$_2$, dans laquelle OAr répond à la formule (II)

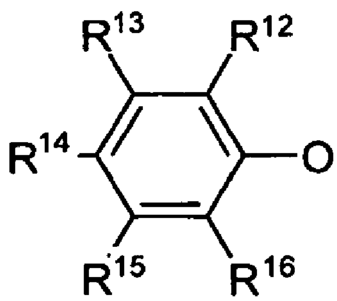

(II)

dans laquelle

- $R^{11}$ représente un radical hydrocarbyle aliphatique ou aromatique, non substitué ou substitué, qui peut comprendre des hétéroatomes,
- $R^{12}$, $R^{13}$, $R^{14}$, $R^{15}$ et $R^{16}$ représentent indépendamment un atome d'hydrogène ou des radicaux hydrocarbyles aliphatiques ou aromatiques, non substitués ou substitués, qui peuvent comprendre des hétéroatomes, ou des mélanges de ceux-ci

dans un procédé de production d'une polyoléfine stabilisée comprenant

- un homo- ou un copolymère d'oléfine (A) ; et
- un antioxydant (B)

au cours du procédé avant une étape de post-production étant une étape de désactivation du catalyseur,
lequel procédé est un procédé réalisé dans au moins deux réacteurs reliés en série, et
dans lequel le composant (B) est apporté au deuxième réacteur et/ou à tout réacteur subséquent, le cas échéant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2072203 A
- WO 2011057927 A
- EP 0198644 A
- EP 2348058 A
- EP 1849819 A
- EP 517868 A
- EP 797599 A
- WO 2004111095 A
- EP 2223943 A
- WO 2004055068 A
- WO 2004055069 A
- WO 2003106510 A
- EP 1655335 A
- EP 0810235 A


### Non-patent literature cited in the description


- *J. Appl. Polymer Sci.,* 2006, vol. 99, 1350-1358